# EUROPÄISCHE PATENTSCHRIFT

(11) **EP 3 455 533 B1**
(45) Veröffentlichungstag und Bekanntmachung des Hinweises auf die Patenterteilung: **15.07.2020**
(21) Anmeldenummer: 16760638.3
(22) Anmeldetag: 28.07.2016
(51) Int. Cl.: F16L 33/213, F16L 17/025, F16L 13/14, F16L 37/088, B21D 39/04

(54) **VERFAHREN ZUM VERBINDEN EINES VERBINDUNGSABSCHNITTES EINES SCHLAUCHES FÜR FLÜSSIGE ODER GASFÖRMIGE MEDIEN MIT EINEM STECKVERBINDER**
METHOD FOR CONNECTING A CONNECTION SECTION OF A TUBE FOR FLUID OR GASEOUS MEDIA WITH A PLUG CONNECTOR
PROCÉDÉ PERMETTANT DE RACCORDER UNE SECTION DE RACCORDEMENT D'UN FLEXIBLE POUR FLUIDES LIQUIDES OU GAZEUX À UN RACCORD ENFICHABLE

(30) Priorität: 09.05.2016 AT 504252016
(43) Veröffentlichungstag der Anmeldung: 20.03.2019
(73) Patentinhaber: Henn GmbH & Co KG., 6850 Dornbirn (AT)
(72) Erfinder: HARTMANN, Harald, 6850 Dornbirn (AT); MOOSBRUGGER, Christian, 6870 Bezau (AT)
(74) Vertreter: Burger, Hannes
(86) Internationale Anmeldenummer: PCT/AT2016/060022
(87) Internationale Veröffentlichungsnummer: WO 2017/193145

(56) Entgegenhaltungen:
- WO-A1-2009/094679
- WO-A1-2015/161333
- DE-U1- 20 111 280
- US-A- 2 181 673
- US-A1- 2003 111 839

## Beschreibung

Die Erfindung betrifft ein Verfahren zum Verbinden eines Verbindungsabschnittes eines Schlauches für flüssige oder gasförmige Medien mit einem Steckverbinder, ; gemäß dem Oberbegriff des Patentanspruchs 1, sowie einen Steckverbinder gemäß dem Oberbegriff des Patentanspruchs 8. Solch ein Verfahren und solch einen Steckvervinder sind z.B. in der US-A-2181673 oder in der US-A-2003/0111839 offenbart.

Aus der AT 509 196 B1 ist ein Verfahren zum Verbinden eines Endabschnitts einer Leitung für flüssige oder gasförmige Medien mit einem Steckverbinder bekannt. Die Leitung für flüssige oder gasförmige Medien ist hierbei ein weichelastischer Kunststoffschlauch. Beim Verbindungsverfahren wird ein erster Wandabschnitt des Steckverbinders unter Verformung des zwischen dem ersten und einem zweiten Wandabschnitt des Steckverbinders liegenden Endabschnitts der Leitung mit einem Drückwerkzeug in Richtung zum zweiten Wandabschnitt verformt. Vor dem Verformen und/oder beim Verformen des ersten Wandabschnitts mit mindestens einer Abstandsmesseinrichtung wird durch eine im ersten oder zweiten Wandabschnitt angeordnete Fensteröffnung hindurch die der Fensteröffnung zugewandte Oberfläche der Leitung erfasst und wird die Verformung des ersten Wandabschnitts in Abhängigkeit vom Ergebnis der mit der Abstandsmesseinrichtung durchgeführten Erfassung der Oberfläche des Endabschnitts der Leitung durchgeführt. Sowohl der erste als auch der zweite Wandabschnitt des Steckverbinders weisen eine zylindrische Wandfläche auf, wodurch ein Hohlzylindrischer Ringraum ausgebildet ist in welchem die Leitung aufgenommen werden kann.

Das in der AT 509 196 B1 beschriebene Verfahren zum Verbinden des Endabschnitts einer Leitung mit dem Steckverbinder bzw. die Ausgestaltung des Steckverbinders weist den Nachteil auf, dass die aktuelle Verpressung bzw. der notwendige Verpressgrad nur unzureichend kontrolliert werden kann.

Aus der AT 511 705 B1 und der WO 2015/161333 A1 sind weitere Verfahren zum Fixieren eines Steckverbinders in einem Endbereich einer Leitung bekannt.

Aufgabe der vorliegenden Erfindung war es, die Nachteile des Standes der Technik zu überwinden und eine Vorrichtung und ein Verfahren zur Verfügung zu stellen, mittels welcher eine verbesserte Verbindung zwischen einem Schlauch und einem Steckverbinder hergestellt werden kann.

Diese Aufgabe wird durch eine Vorrichtung und ein Verfahren gemäß den Ansprüchen gelöst.

Erfindungsgemäß ist ein Verfahren zum Verbinden eines Verbindungsabschnittes eines Schlauches für flüssige oder gasförmige Medien mit einem Steckverbinder vorgesehen, wobei der Steckverbinder einen Verbinderkörper umfasst, welcher Verbinderkörper einen Ringraum aufweist, der durch einen hülsenförmigen, im Querschnitt eine zentrale Längsachse des Steckverbinders ringförmig umgebenden ersten Mantelabschnitt und einem hülsenförmigen, im Querschnitt die zentrale Längsachse ringförmig umgebenden zweiten Mantelabschnitt des Steckverbinders ausgebildet ist. Der erste Mantelabschnitt ist vom zweiten Mantelabschnitt umgeben und die Mantelabschnitte sind an einem zweiten Endabschnitt offen zueinander, wodurch eine Schlauchaufnahmeseite des Verbinderkörpers ausgebildet ist.
- In einem ersten Verfahrensschritt wird der Verbindungsabschnitt des Schlauches von der Schlauchaufnahmeseite des Verbinderkörpers her in den Ringraum des Steckverbinders eingeschoben und positioniert;
- In einem zweiten Verfahrensschritt verformt ein Presswerkzeug den ersten Mantelabschnitt des Verbinderkörpers unter gleichzeitiger Verformung des zwischen dem ersten Mantelabschnitt und dem zweiten Mantelabschnitt liegenden Verbindungsabschnittes des Schlauches in Richtung zum zweiten Mantelabschnitt, wodurch der Verbindungsabschnitt des Schlauches zwischen erstem Mantelabschnitt und zweitem Mantelabschnitt geklemmt wird.
Der zweite Mantelabschnitt weist an einer Vorderkante der Schlauchaufnahmeseite eine Verjüngung auf, wodurch sichergestellt wird, dass der Verbindungsabschnitt des Schlauches während des Verpressvorganges zumindest im von der Vorderkante distanzierten Bereich des Ringraumes frei in Richtung zweiten Mantelabschnitt verformt wird, bevor der Verbindungsabschnitt des Schlauches am zweiten Mantelabschnitt zum Anliegen kommt.

Von Vorteil am erfindungsgemäßen Verfahren ist, dass durch die Verjüngung sichergestellt ist, dass der Verbindungsabschnitt des Schlauches während des Verpressvorganges zumindest im von der Vorderkante distanzierten Bereich des Ringraumes frei in Richtung zweitem Mantelabschnitt verformt wird, bevor der Verbindungsabschnitt des Schlauches am zweiten Mantelabschnitt zum Anliegen kommt. Dadurch kann erreicht werden, dass eine Wandstärke des Schlauches während dem Verpressvorgang erfasst werden kann. Darüber hinaus kann durch diese Maßnahme die Lage der Oberfläche des Schlauches genau erfasst werden, sodass während des Verpressvorganges kontinuierlich überwacht werden kann, wann die Außenmantelfläche des Schlauches an der Innenmantelfläche des zweiten Mantelabschnittes zum Anliegen kommt. Dadurch kann die Verpressqualität zwischen Schlauch und Verbinderkörper überwacht werden und in der Serienfertigung ein gleichmäßiges Ergebnis der Verpressung erzielt werden. Diese Möglichkeit der Überwachung des Verpressgrades des Schlauches ergibt sich nur dann, wenn der Schlauch während dem Verpressvorgang zumindest in einem Anfangsstadium des Verpressens frei in Richtung zweiten Mantelabschnitt verformt werden kann. Dies kann durch die Verjüngung sichergestellt werden, da Schläuche mit einem zu großen Außendurchmesser, welche am zweiten Mantelabschnitt anliegen würden, aufgrund der Verjüngung nicht in den Ringraum eingeführt werden können und somit als Ausschussteile ausscheiden.

Weiters sieht die Erfindung vor, dass mittels einer Abstandsmesseinrichtung zumindest an zwei axial zueinander beabstandeten Messpunkten die Lage einer außenliegenden Mantelfläche des zweiten Mantelabschnittes und die Lage einer Oberfläche des Schlauches und/oder die Lage einer außenliegenden Mantelfläche des ersten Mantelabschnittes erfasst wird. Von Vorteil ist hierbei, dass durch die Abstandsmesseinrichtung vor dem Verpressvorgang die Lage der Mantelflächen bzw. die Lage des Schlauches erfasst werden kann und dass während dem Verpressvorgang der aktuelle Verpressgrad erfasst werden kann, wobei die Steuerung der Pressvorrichtung die weiteren Umformschritte auf Basis des aktuellen Verpressgrades und des gewünschten Verpressgrades berechnen kann.

Ferner kann vorgesehen sein, dass aus der Lage der außenliegenden Mantelfläche des zweiten Mantelabschnittes und der Lage der Oberfläche des Schlauches ein Abstand zwischen diesen beiden Oberflächen berechnet wird. Von Vorteil ist hierbei, dass durch Berechnung des Abstandes der Lage der außenliegenden Mantelfläche des zweiten Mantelabschnittes und der Lage der Oberfläche des Schlauches ermittelt werden kann, wie weit der erste Mantelabschnitt und damit auch der Schlauch verformt werden kann, bevor der Schlauch am zweiten Mantelabschnitt zum Anliegen kommt.

Darüber hinaus kann vorgesehen sein, dass vor dem Verformen und/oder beim Verformen des ersten Mantelabschnitts mittels einer Abstandsmesseinrichtung durch eine im zweiten Mantelabschnitt angeordnete erste Fensteröffnung und/oder zweite Fensteröffnung hindurch die den Fensteröffnungen zugewandte Oberfläche des Schlauches erfasst wird und die Verformung des ersten Mantelabschnittes in Abhängigkeit vom Ergebnis der mit der Abstandsmesseinrichtung durchgeführten Erfassung der Oberfläche des Schlauches durchgeführt wird. Von Vorteil ist hierbei, dass durch diese Maßnahme der aktuelle Verformgrad des ersten Mantelabschnittes und/oder des Schlauches während des Verpressvorganges ständig kontrolliert werden kann und diese Information in die Steuerung der Pressvorrichtung einfließen kann.

Vorteilhaft ist auch eine Ausprägung, gemäß welcher vorgesehen sein kann, dass als Abstandsmesseinrichtung ein Profilsensor verwendet wird, welcher während des Verpressvorganges zumindest die zwei Messpunkte, vorzugsweise mehrere Messpunkte auf einem vorgegebenen Längsbereich erfasst. Insbesondere bei der Verwendung eines Profilsensors können zwei oder mehrere verschiedene örtlich voneinander beabstandete Erfassungspunkte festgelegt werden, an welchem die Lage des ersten Mantelabschnittes und/oder die Lage des zweiten Mantelabschnittes und/oder die Lage des Schlauches erfasst werden kann.

Gemäß einer Weiterbildung ist es möglich, dass während des Verpressvorganges eine Wandstärke des Schlauches, auf Basis der Information über die aktuelle Position des Presswerkzeuges und auf Basis der von der Abstandsmesseinrichtung erfassten Messwerte der Lage der den Fensteröffnungen zugewandten Oberfläche des Schlauches, berechnet wird. Von Vorteil ist hierbei, dass durch diese Maßnahme die Wandstärke des Schlauches genau ermittelt werden kann, wobei dazu kein eigener Verfahrensschritt vor dem Einlegen des Verbinderkörpers in die Pressvorrichtung notwendig ist. Insbesondere können dadurch die verhältnismäßig großen Ungenauigkeiten in der Wandstärke des Schlauches ermittelt werden und als Parameter beim Verpressvorgang berücksichtigt werden. Dadurch kann bei mehreren Verpressvorgängen eine kontinuierliche Verpressqualität erreicht werden.

Ferner kann es zweckmäßig sein, wenn vor dem Einschieben des Verbindungsabschnittes des Schlauches in den Ringraum des Steckverbinders der erste Mantelabschnitt mittels der Abstandsmesseinrichtung erfasst wird. Von Vorteil ist hierbei, dass durch diese Maßnahmen die Lage des ersten Mantelabschnittes erfasst werden kann.

Darüber hinaus kann vorgesehen sein, dass mittels der Abstandsmesseinrichtung die korrekte Einsteckposition des Verbindungsabschnittes des Schlauches im Ringraum erfasst wird. Von Vorteil ist hierbei, dass durch diese Maßnahme sichergestellt werden kann, dass der Verpressvorgang erst dann gestartet wird, wenn der Schlauch korrekt im Ringraum eingesetzt ist und somit die Qualität der Verpressung gesteigert werden kann.

Erfindungsgemäß ist ein Steckverbinder, insbesondere zur Verwendung in einem Verfahren nach einem der vorhergehenden Ansprüche ausgebildet. Der Steckverbinder umfasst einen Verbinderkörper, welcher Verbinderkörper einen Ringraum zur Aufnahme eines Verbindungsabschnittes eines Schlauches für flüssige oder gasförmige Medien aufweist, wobei der Ringraum zwischen einem hülsenförmigen, im Querschnitt eine zentrale Längsachse des Steckverbinders ringförmig umgebenden ersten Mantelabschnitt und einem hülsenförmigen, im Querschnitt die zentrale Längsachse ringförmig umgebenden zweiten Mantelabschnitt des Steckverbinders liegt, wobei der erste Mantelabschnitt vom zweiten Mantelabschnitt umgeben ist und die Mantelabschnitte an einem zweiten Endabschnitt offen zueinander sind, wodurch eine Rohraufnahmeseite des Verbinderkörpers ausgebildet ist. Der zweite Mantelabschnitt weist an dessen Vorderkante der Rohraufnahmeseite eine Verjüngung auf.

Von Vorteil an der erfindungsgemäßen Ausbildung des Steckverbinders ist, dass durch die Verjüngung sichergestellt wird, dass der Verbindungsabschnitt des Schlauches während des Verpressvorganges zumindest im von der Vorderkante distanzierten Bereich des Ringraumes frei in Richtung zweiten Mantelabschnitt verformt werden kann, bevor der Verbindungsabschnitt des Schlauches am zweiten Mantelabschnitt zum Anliegen kommt.

Gemäß einer besonderen Ausprägung ist es möglich, dass eine Einführweite des Ringraumes kleiner ist als eine Hauptweite des Ringraumes. Von Vorteil ist hierbei, dass durch diese Maßnahme das Einführen von Schläuchen, welche nicht die erforderlichen Abmessungen aufweisen, vermieden werden kann.

Entsprechend einer vorteilhaften Weiterbildung kann vorgesehen sein, dass die Einführweite des Ringraumes zwischen 50% und 99%, insbesondere zwischen 70% und 95%, bevorzugt zwischen 88% und 92% einer Hauptweite des Ringraumes beträgt. Besonders eine Einführweite in diesem Größenbereich eignet sich ideal zum Begrenzen der Abmessungen des Schlauches.

Insbesondere kann es vorteilhaft sein, wenn die Verjüngung auf einer axialen Länge von 1mm bis 20mm, insbesondere von 2mm bis 15mm, bevorzugt von 2mm bis 8mm ausgebildet ist. Eine Verjüngung, welche sich auf die angegebene Länge erstreckt, kann besonders einfach und effizient hergestellt werden.

Weiters kann vorgesehen sein, dass die Verjüngung um einen Überstand von 0,1mm bis 10mm, insbesondere von 0,3mm bis 3mm, bevorzugt von 0,4mm bis 1mm gegenüber einem Innendurchmesser des zweiten Mantelabschnittes vorstehend ausgebildet ist. Eine Ausgestaltung des Verbinderkörpers mit in den hier beschriebenen Größenverhältnissen ist besonders gut zur Erfüllung der Vorteilhaften Effekte geeignet.

Erfindungsgemäß wird vorgesehen, dass im zweiten Mantelabschnitt eine erste Fensteröffnung und eine zweite Fensteröffnung ausgebildet sind, wobei die erste Fensteröffnung im Bereich der Verjüngung ausgebildet ist. Von Vorteil ist hierbei, dass die Fensteröffnungen zur Erfassung der Oberfläche des Schlauches bzw. zur Erfassung der Oberfläche des ersten Mantelabschnittes mittels einer an der Pressmaschine angeordneten Abstandsmesseinrichtung vorgesehen sein kann.

Vorteilhaft ist auch eine Ausprägung, gemäß welcher vorgesehen sein kann, dass auf den Umfang verteilt im zweiten Mantelabschnitt drei erste Fensteröffnungen und drei zweite Fensteröffnung ausgebildet sind, wobei die Fensteröffnungen jeweils in einem Winkel von 120° zueinander am Umfang des zweiten Mantelabschnittes angeordnet sind. Von Vorteil ist hierbei, dass durch diese Maßnahme die Rundheit bzw. die exakte Form des Verbinderkörpers erfasst werden kann.

Mittels einem Profilsensor können Winkel, Stufen und Positionen erkannt und verfolgt werden. Zur Konvertierung der erfassten Daten in gängige Feldbussysteme kann ein Ausgabemodul vorgesehen sein. Damit werden die Messergebnisse zur Auswertung oder Weiterverarbeitung, wahlweise über digitale oder analoge Module, ausgegeben. Die Profilinformationen können beispielsweise über eine Laserlinie erreicht werden, die auf die Messobjektoberfläche projiziert wird. Das diffus reflektierte Licht wird über eine Optik auf eine Sensor-Matrix abgebildet. Der Sensor berechnet aus dem Kamerabild Profildaten und daraus direkt die relevanten Kennwerte. Diese Kennwerte können dann direkt per RS422 oder in Verbindung mit dem Ausgabemodul an eine Steuerung weitergegeben werden. Weiters ist es auch denkbar, dass vom Profilsensor direkt mit Toleranzen bewertete Schaltsignale ausgegeben werden.

Darüber hinaus kann ein Steckverbinder, insbesondere zur Verwendung in einem Straßenfahrzeug ausgebildet sein. Der Steckverbinder umfasst einen Verbinderkörper, welcher Verbinderkörper einen Ringraum zur Aufnahme eines Verbindungsabschnittes eines Schlauches für flüssige oder gasförmige Medien aufweist, wobei der Ringraum zwischen einem hülsenförmigen, im Querschnitt eine zentrale Längsachse des Steckverbinders ringförmig umgebenden ersten Mantelabschnitt und einem hülsenförmigen, im Querschnitt die zentrale Längsachse ringförmig umgebenden zweiten Mantelabschnitt des Steckverbinders liegt, wobei der erste Mantelabschnitt vom zweiten Mantelabschnitt umgeben ist und die Mantelabschnitte an einem zweiten Endabschnitt offen zueinander sind, wodurch eine Schlauchaufnahmeseite des Verbinderkörpers ausgebildet ist, wobei an den ersten Mantelabschnitt eine Dichtungsaufnahme anschließt, die ebenfalls im Verbinderkörper ausgeformt ist und in der ein Dichtungselement aufgenommen ist. Das Dichtungselement axial geklemmt in der Dichtungsaufnahme aufgenommen ist.

Von Vorteil an dieser Ausbildung des Steckverbinders ist, dass durch das axiale Klemmen des Dichtungselementes in der Dichtungsaufnahme erreicht werden kann, dass das Dichtungselement einen besonders guten Sitz in der Dichtungsaufnahme aufweist. Dadurch kann ein unerwünschtes Verrutschen des Dichtungselementes in der Dichtungsaufnahme vermieden werden. Somit kann die Position an welcher die Dichtlippe des Dichtungselementes mit einem Gegensteckverbinder zusammenwirkt exakt festgelegt werden, um eine dichte Verbindung zwischen dem Steckverbinder und dem Gegensteckverbinder zu schaffen.

Weiters kann vorgesehen sein, dass eine Breite des Dichtungselementes im unverbauten Zustand größer ist als eine Breite der Dichtungsaufnahme. Durch diese Maßnahme kann erreicht werden, dass das Dichtungselement beim Einbau in die Dichtungsaufnahme durch die Stirnwandung und die zweite Stirnwandung der Dichtungsaufnahme geklemmt wird und elastisch oder auch plastisch verformt wird. Im verbauten Zustand ist dadurch das Dichtungselement geklemmt.

Ferner kann vorgesehen sein, dass die Dichtungsaufnahme durch eine Stirnwandung und eine zweite Stirnwandung begrenzt ist, wobei die Dichtungsaufnahme in Richtung zur zentralen Längsachse hin eine Verjüngung aufweist. Durch diese Maßnahme kann ein besonders guter Sitz des Dichtungselementes in der Dichtungsaufnahme erreicht werden, da das Dichtungselement an dessen Innenseite stärker geklemmt ist als an dessen Außenseite.

Darüber hinaus kann vorgesehen sein, dass die Verjüngung dadurch gebildet ist, dass die zweite Stirnwandung in einem Winkel zur Stirnwandung angeordnet ist. Durch diese Maßnahme kann ein besonders guter Sitz des Dichtungselementes in der Dichtungsaufnahme erreicht werden, da das Dichtungselement an dessen Innenseite stärker geklemmt ist als an dessen Außenseite.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer Steckerbaugruppe in einem Viertelschnitt;
- Fig. 2: ein mit der Steckerbaugruppe ausgestattetes Fahrzeug;
- Fig. 3: eine Schnittdarstellung der Steckerbaugruppe in einer Explosionsansicht;
- Fig. 4: eine perspektivische Schnittdarstellung der Steckerbaugruppe nach Fig. 3 in einer zusammengebauten Stellung mit einer Pressmaschine;
- Fig. 5: eine Schnittdarstellung der Steckerbaugruppe im unverpressten Zustand und der Pressmaschine in Ruhestellung;
- Fig. 6: eine Schnittdarstellung der Steckerbaugruppe im verpressten Zustand und der Pressmaschine in Arbeitsstellung;
- Fig. 7: eine Schnittdarstellung eines Details des in der Dichtungsaufnahme aufgenommenen Dichtungselementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

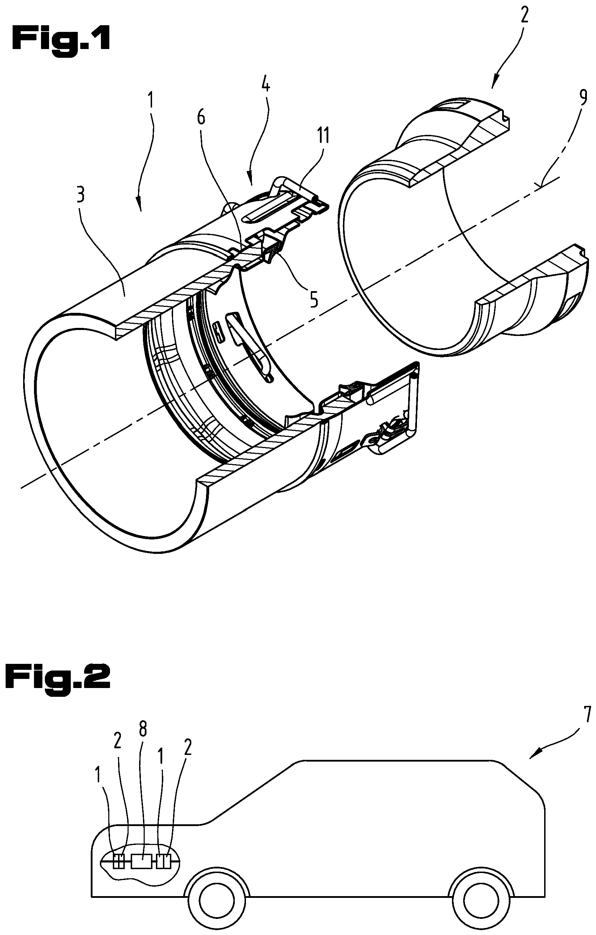

Fig. 1 zeigt eine perspektivische Ansicht einer Steckerbaugruppe 1, wobei diese in einem Viertelschnitt geschnitten dargestellt ist. Weiters ist in Fig. 1 schematisch ein Gegensteckverbinder 2 dargestellt, welcher mit der Steckerbaugruppe 1 verbindbar ist. Das Zusammenwirken zwischen Steckerbaugruppe 1 und einem Gegensteckverbinder 2 ist in der AT 509 196 B1 hinlänglich beschrieben.

In Fig. 1 ist die Steckerbaugruppe 1 in einem zusammengebauten Zustand dargestellt. Die Steckerbaugruppe 1 umfasst einen Schlauch 3, einen Steckverbinder 4 sowie ein im Steckverbinder 4 aufgenommenes Dichtungselement 5, welches zum Abdichten zwischen Steckverbinder 4 und Gegensteckverbinder 2 dient. Der Steckverbinder 4 umfasst einen Verbinderkörper 6, welcher vorzugsweise als einteiliges Umformteil, etwa als Tiefziehteil, insbesondere aus einem Edelstahlblech gebildet ist.

Fig. 2 zeigt eine schematische Darstellung eines Fahrzeuges 7 mit verbauter Steckerbaugruppe 1 entsprechend Fig. 1. Wie in Fig. 2 ersichtlich, wird die Steckerbaugruppe 1 vorzugsweise in einem Fahrzeug 7, insbesondere in einem straßengebundenen Kraftfahrzeug mit Verbrennungsmotor eingesetzt. Im Speziellen wird die Steckerbaugruppe 1 zum Verbinden verschiedener Bauteile der Frischluftzuführung zum Verbrennungsmotor eingesetzt. Beispielsweise kann vorgesehen sein, dass die Steckerbaugruppe 1 mit dem entsprechenden Gegensteckverbinder 2 zur Verbindung zweier Teile im Ansaugbereich eines Turboladers 8 vorgesehen ist. Weiters kann auch vorgesehen sein, dass eine derartige Steckerverbindung in der vom Turbolader 8 abgehenden Druckseite zur Verbindung zweier Bauteile eingesetzt wird.

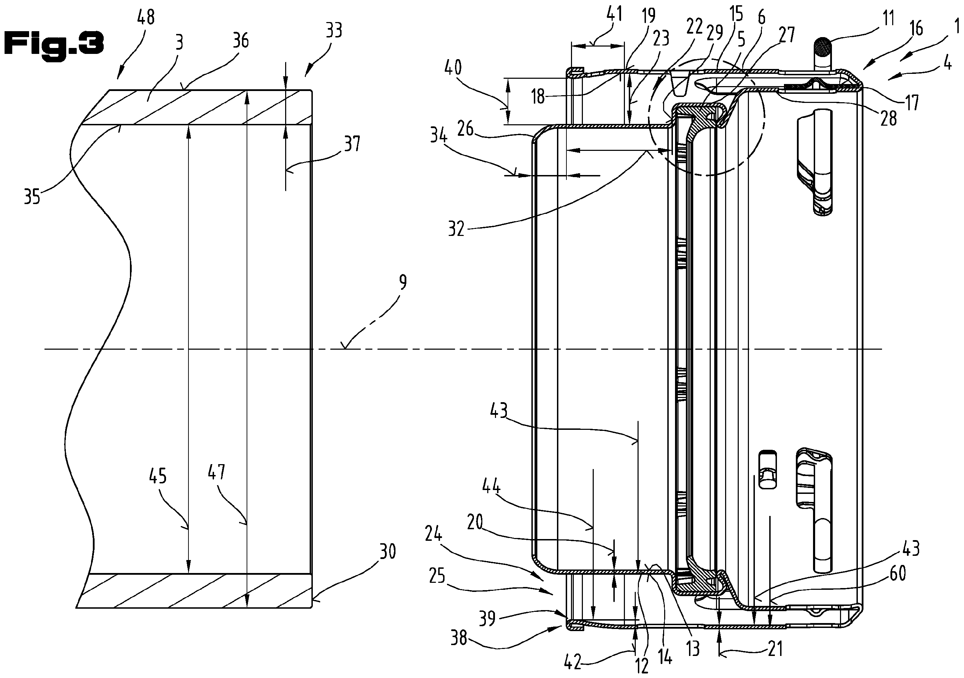

Fig. 3 zeigt einen Querschnitt der Steckerbaugruppe 1 entlang einer zentralen Längsachse 9 des Steckverbinders 4. Um die einzelnen Bauteile gut beschreiben zu können, sind diese in der Fig. 3 in einer Explosionsansicht dargestellt.

Wie in Fig. 3 gut ersichtlich, umfasst der Steckverbinder 4 ein Federelement 11 durch welches die Steckerbaugruppe 1 in deren Position relativ zum, mit der Steckerbaugruppe 1 zusammengestesteckten, Gegensteckverbinder 2 gesichert werden kann. Das Federelement 11 ist dermaßen konstruiert, dass es leicht aktiviert und deaktiviert werden kann, sodass bedarfsweise die Steckerbaugruppe 1 und der Gegensteckverbinder 2 voneinander getrennt bzw. miteinander verbunden werden können.

Wie in Fig. 3 ersichtlich, ist am Verbinderkörper 6 ein erster Mantelabschnitt 12 ausgebildet, welcher die zentrale Längsachse 9 des Steckverbinders 4 hülsenförmig umgibt. Mit anderen Worten ausgedrückt, ist der erste Mantelabschnitt 12 ein rotationssymmetrischer Hohlzylinder.

Der erste Mantelabschnitt 12 weist eine innenliegende Mantelfläche 13 und eine außenliegende Mantelfläche 14 auf. Den ersten Mantelabschnitt 12 umgibt ein zweiter Mantelabschnitt 15, welcher ebenfalls bezüglich der zentralen Längsachse 9 rotationssymmetrisch ausgebildet ist. Der erste Mantelabschnitt 12 ist mit dem zweiten Mantelabschnitt 15 an einem ersten Endabschnitt 16 mittels eines ersten Stirnwandabschnittes 17 verbunden.

Gleich wie der erste Mantelabschnitt 12 weist auch der zweite Mantelabschnitt 15 eine innenliegende Mantelfläche 18 und eine außenliegende Mantelfläche 19 auf.

Der erste Mantelabschnitt 12 wird durch seine innenliegende Mantelfläche 13 und die außenliegende Mantelfläche 14 begrenzt, wodurch sich eine Wandstärke 20 des ersten Mantelabschnittes 12 ergibt. Der zweite Mantelabschnitt 15 wird ebenfalls durch eine innenliegende Mantelfläche 18 und eine außenliegende Mantelfläche 19 begrenzt, wodurch sich eine Wandstärke 21 des zweiten Mantelabschnittes 15 ergibt.

Durch die Beabstandung der beiden Mantelabschnitte 12, 15 zueinander, ergibt sich ein Ringraum 22. Der Ringraum 22 wird insbesondere in radialer Richtung durch die außenliegende Mantelfläche 14 des ersten Mantelabschnittes 12 und durch die innenliegende Mantelfläche 18 des zweiten Mantelabschnittes 15 begrenzt.

Die beiden Mantelabschnitte 12, 15 sind an einem zweiten Endabschnitt 24 des Steckverbinders 4 offen zueinander, wodurch sich eine Schlauchaufnahmeseite 25 des Verbinderkörpers 6 ergibt.

Es kann vorgesehen sein, dass der erste Mantelabschnitt 12 eine Abschrägung 26 aufweist, welche an der Schlauchaufnahmeseite 25 des ersten Mantelabschnittes 12 ausgebildet ist. Eine derartige Abschrägung 26 bringt den Vorteil mit sich, dass der Schlauch 3 leicht in den Ringraum 22 eingeschoben werden kann.

Weiters kann vorgesehen sein, dass an den ersten Mantelabschnitt 12 in Richtung ersten Endabschnitt 16 des Steckverbinders 4 betrachtet, eine Dichtungsaufnahme 27 anschließt, welche ebenfalls im Verbinderkörper 6 ausgeformt ist. In einer derartigen Dichtungsaufnahme 27 kann das Dichtungselement 5 aufgenommen sein. Weiters kann vorgesehen sein, dass an die Dichtungsaufnahme 27 ein dritter Mantelabschnitt 28 anschließt, welcher zur Aufnahme des Gegensteckverbinders 2 dient. An den dritten Mantelabschnitt 28 kann der Stirnwandabschnitt 17 anschließen, welcher den dritten Mantelabschnitt 28 mit dem zweiten Mantelabschnitt 15 verbindet. Durch diesen Aufbau bzw. Zusammenhang ist, wie bereits erwähnt, der erste Mantelabschnitt 12 über den dritten Mantelabschnitt 28 und den Stirnwandabschnitt 17 mit dem zweiten Mantelabschnitt 15 verbunden.

Bevorzugt wird der Verbinderkörper 6 in einem Tiefziehverfahren hergestellt, wobei sämtliche Wandstärken der Mantelabschnitte des Verbinderkörpers 6 in etwa gleich groß sind.

Wie in der Ansicht in Fig. 3 ersichtlich, kann es auch zweckmäßig sein, dass die Dichtungsaufnahme 27 eine Stirnwandung 29 aufweist, welche an den ersten Mantelabschnitt 12 anschließt. Die Stirnwandung 29 kann hier insbesondere in Richtung zum zweiten Mantelabschnitt 15 gebogen sein, wodurch sich eine Aufnahmemulde für das Dichtungselement 5 ergibt.

Die Ausbildung der Stirnwandung 29 bringt weiters den Vorteil mit sich, dass im Zuge des Zusammenbaus der Steckerbaugruppe 1 der Schlauch 3 soweit in den Ringraum 22 eingeschoben werden kann, bis er an der Stirnwandung 29 anliegt. Somit kann die Stirnwandung 29 auch dazu dienen, um den Positioniervorgang des Schlauches 3 zu erleichtern. Mit anderen Worten ausgedrückt, dient die Stirnwand 29 als axialer Positionieranschlag für eine Stirnfläche 30 des Schlauches 3.

Eine axiale Erstreckung 32 des Ringraumes 22 wird vorzugsweise so groß gewählt, dass der Ringraum 22 eine ausreichende Länge aufweist, um den Schlauch 3, insbesondere einen an diesem ausgebildeten Verbindungsabschnitt 33, aufzunehmen.

Weiters kann vorgesehen sein, dass sich der erste Mantelabschnitt 12 weiter in Richtung Schlauchaufnahmeseite 25 erstreckt als der zweite Mantelabschnitt 15 und somit in einem gewissen Abstand 34 gegenüber dem zweiten Mantelabschnitt 15 in axialer Richtung gesehen vorsteht.

Wie aus Fig. 3 weiters ersichtlich weist der Schlauch 3 eine Innenmantelfläche 35 und eine Außenmantelfläche 36 auf. Eine Wandstärke 37 des Schlauches 3, welche sich durch die Innenmantelfläche 35 und die Außenmantelfläche 36 ergibt, wird derart groß gewählt, dass der Schlauch 3 dem im Schlauch 3 auftretenden Druck standhalten kann. Die Wandstärke 37 des Schlauches 3 kann zwischen 1mm und 20mm, insbesondere zwischen 2mm und 8mm, bevorzugt zwischen 3mm und 5,5mm betragen.

Der zweite Mantelabschnitt 15 des Verbinderkörpers 6 weist an einer Vorderkante 38 der Schlauchaufnahmeseite 25 eine Verjüngung 39 auf. Durch die Verjüngung 39 wird sichergestellt, dass der Verbindungsabschnitt 33 des Schlauches 3 während des Verpressvorganges zumindest im von der Vorderkante 38 distanzierten Bereich des Ringraumes 22 frei in Richtung zweiten Mantelabschnitt 15 verformt werden kann, bevor der Verbindungsabschnitt 33 des Schlauches 3 am zweiten Mantelabschnitt 15 zum Anliegen kommt.

Durch die Verjüngung 39 ergibt sich eine Einführweite 40 des Ringraumes 22, welche kleiner ist als die Hauptweite 23 des Ringraumes 22. Dadurch dass die Einführweite 40 des Ringraumes 22 durch die Verjüngung 39, welche im zweiten Mantelabschnitt 15 ausgebildet ist, begrenzt ist kann das Einführen von fehlerhaft dimensionierten Schläuchen in den Ringraum 22 weitestgehend vermieden werden.

Weiters kann vorgesehen sein, dass sich die Verjüngung 39 auf einer axialen Länge 41 erstreckt. Hierbei ist es denkbar, dass die Verjüngung 39 einen sich kontinuierlich verändernden Querschnitt aufweist und daher konisch ausgebildet ist. Eine derartig ausgebildete Verjüngung 39 kann fertigungstechnisch einfach hergestellt werden. Weiters ist es auch denkbar, dass die Verjüngung 39 bogenförmig ausgebildet ist. In wieder einer anderen Variante ist es auch denkbar, dass die Verjüngung 39 durch eine Abstufung gebildet ist.

Für die Funktionalität der Verjüngung 39 ist jedoch nicht deren Form maßgebend, sondern ist einzig und alleine erforderlich dass die Verjüngung 39 um einen Überstand 42 gegenüber einem Innendurchmesser 43 des Hauptbereiches des zweiten Mantelabschnittes 15 vorstehend ausgebildet ist.

Insbesondere ist vorgesehen, dass der zweite Mantelabschnitt 15 im Bereich der Verjüngung 39 einen kleineren Innendurchmesser 44 aufweist als der Innendurchmesser 43 des Hauptbereiches ist.

Ein Innendurchmesser 45 des Schlauches 3 ist in etwa so groß gewählt, wie ein Außendurchmesser 46 des ersten Mantelabschnittes 12. Von Vorteil ist es, wenn die beiden Durchmesser 45, 46 so aufeinander abgestimmt sind, dass der Schlauch 3 leicht auf den ersten Mantelabschnitt 12 aufgeschoben werden kann. Im dargestellten Ausführungsbeispiel beträgt der Innendurchmesser 45 des Schlauches 3 in etwa 52mm.

Ein Außendurchmesser 47 des Schlauches 3 wird vorzugsweise so groß gewählt, dass er kleiner ist als ein Innendurchmesser 44 des zweiten Mantelabschnittes 15 im Bereich der Verjüngung 39. Dadurch kann der Schlauch 3 während des Zusammenbaus der Steckerbaugruppe 1 leicht in den Ringraum 22 des Verbinderkörpers 6 eingeschoben werden. Durch die Ausbildung wonach der zweite Mantelabschnitt 15 im Bereich der Verjüngung 39 einen kleineren Innendurchmesser 44 aufweist als der Innendurchmesser 43 des Hauptbereiches, wird sichergestellt dass im eingeschobenen Zustand der Schlauch 3 nicht im Hauptbereich des zweiten Mantelabschnittes 15 an diesem anliegt.

Weiters kann vorgesehen sein, dass der Schlauch 3 im Bereich seines Verbindungsabschnittes 33 eine größere oder kleinere Wandstärke 37 aufweist als in einem hinteren Schlauchabschnitt 48.

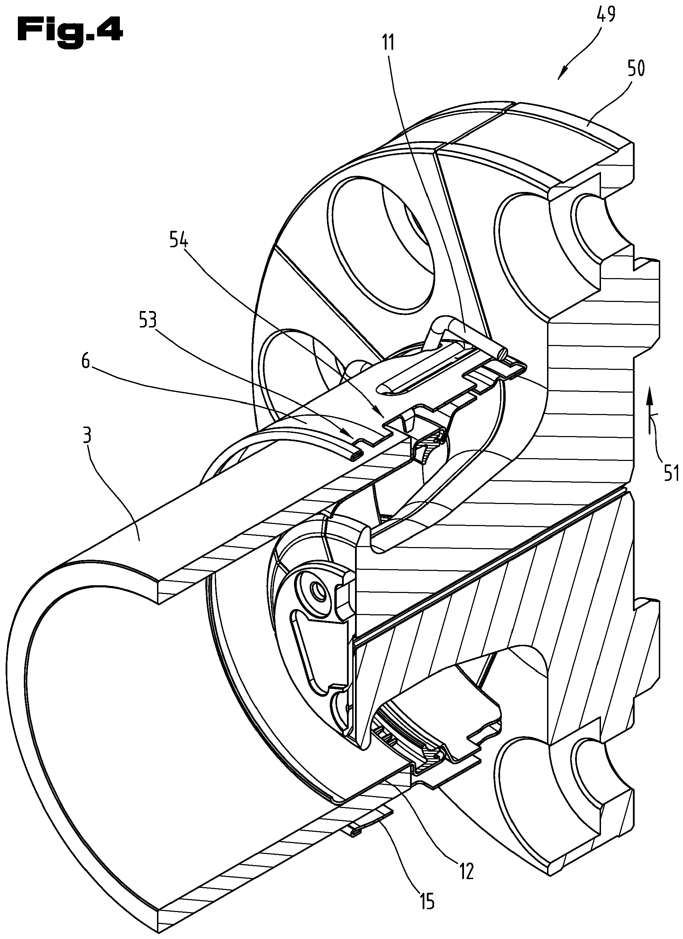

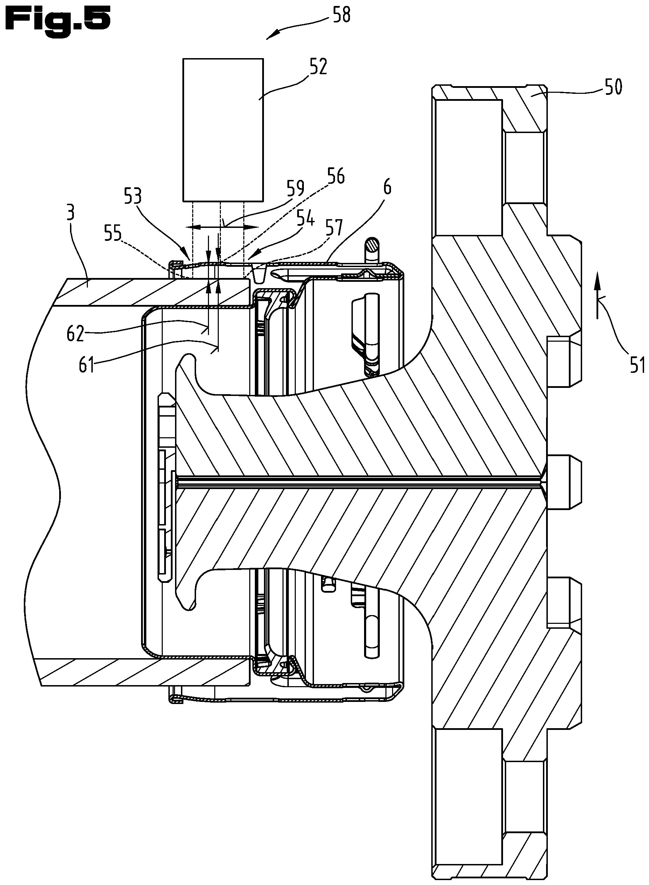

Fig. 4 zeigt die Steckerbaugruppe 1 zusammen mit einer Pressmaschine 49, welche zum Verbinden des Schlauches 1 mit dem Steckverbinder 4 dient, in einer perspektivischen Schnittdarstellung und Fig. 5 zeigt diese Bauteile in einer herkömmlichen Schnittdarstellung, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

In den Figuren 4 und 5 ist ein erster Verfahrensschritt zum Zusammenbau der Steckerbaugruppe 1 gezeigt, wobei der Schlauch 3 noch nicht mit dem Steckverbinder 4 verpresst ist.

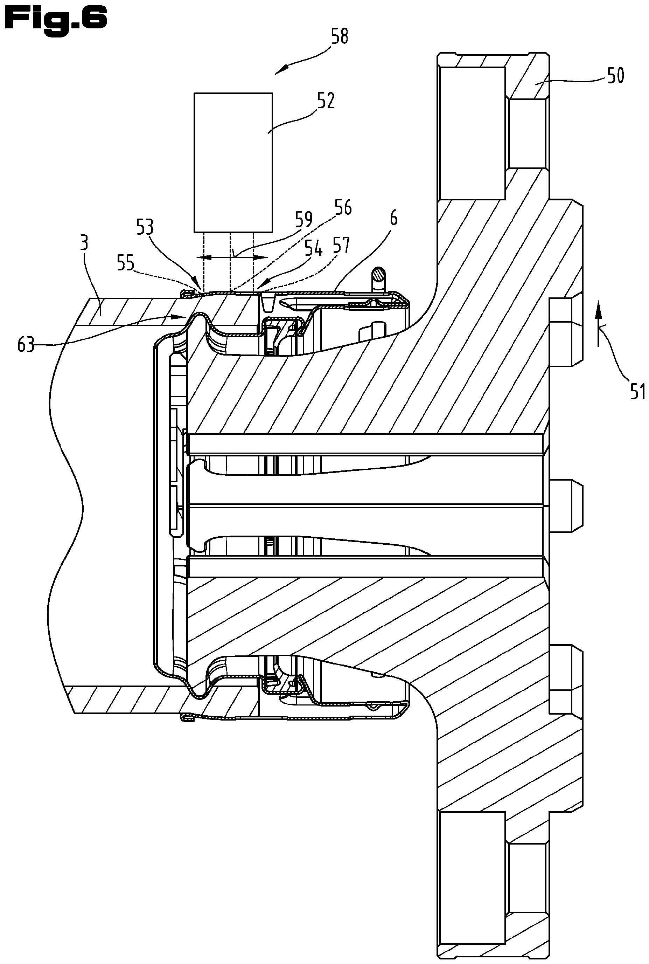

Fig. 6 zeigt die Steckerbaugruppe 1 zusammen mit der Pressmaschine 49 in einer perspektivischen Schnittdarstellung, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

In der Fig. 6 ist ein weiterer Verfahrensschritt zum Zusammenbau der Steckerbaugruppe 1 gezeigt, wobei in dieser Darstellung der Schlauch 3 gerade mit dem Steckverbinder 4 verpresst wird.

Ein Zusammenbau der Steckerbaugruppe 1 wird im Folgenden anhand einer Zusammenschau der Darstellungen in den Figuren 3 bis 6 beschrieben.

Die Pressmaschine 49 umfasst ein Presswerkzeug 50, mittels dem der erste Mantelabschnitt 12 des Verbinderkörpers 6 verformt werden kann und somit die Pressverbindung der Steckerbaugruppe 1 hergestellt werden kann. Die Presswerkzeuge 50 sind in Radialrichtung 51 verschiebbar an der Pressmaschine 49 angeordnet.

In einem ersten Verfahrensschritt zur Herstellung der Steckerbaugruppe 1 wird der Verbinderkörper 6 auf das Presswerkzeug 50 der Pressmaschine 49 aufgeschoben und somit für den Verpressvorgang vorbereitet. Der Verbinderkörper 6 wird hierbei derart auf das Presswerkzeug 50 aufgeschoben, dass der Ringraum 22 frei zugänglich ist, sodass der Schlauch 3 in diesen eingeschoben werden kann. Anschließend wird in einem zweiten Verfahrensschritt der Verbindungsabschnitt 33 des Schlauches 3 in den Ringraum 22 des Verbinderkörpers 6 eingeschoben.

Zur Kontrolle der richtigen Lage des Schlauches 3 kann eine Abstandsmesseinrichtung 52 vorgesehen sein, welche das Vorhandensein des Schlauches 3 erfassen kann. Insbesondere kann vorgesehen sein, dass im zweiten Mantelabschnitt 15 des Verbinderkörpers 6 eine erste Fensteröffnung 53 bzw. eine zweite Fensteröffnung 54 angeordnet sind, durch welche hindurch der Messstrahl der Abstandsmesseinrichtung 52 in den Ringraum 22 eindringen kann und dadurch die Lage der außenliegenden Mantelfläche 14 des ersten Mantelabschnitts 12 bzw. die Lage der Außenmantelfläche 36 des Schlauches 3 erfassen kann.

Insbesondre kann vorgesehen sein, dass durch die erste Fensteröffnung 53 hindurch ein erster Messpunkt 55 erfasst werden kann. Der erste Messpunkt 55 kann je nachdem ob ein Schlauch 3 in den Ringraum 22 eingesetzt ist, an der Außenmantelfläche 36 des Schlauches 3 oder an der außenliegenden Mantelfläche 14 des ersten Mantelabschnittes 12 liegen. Weiters kann von der Abstandsmesseinrichtung 52 ein zweiter Messpunkt 55 erfasst werden, welcher die Lage der außen liegenden Mantelfläche 19 des zweiten Mantelabschnittes 15 erfassen kann.

Darüber hinaus kann vorgesehen sein, dass die Abstandsmesseinrichtung 52 durch die zweite Fensteröffnung 54 hindurch in den Ringraum 22 hineinmisst. Dabei kann vorgesehen sein, dass ein dritter Messpunkt 57 erfasst wird, wobei beim dritten Messpunkt 57 analog zum ersten Messpunkt 55 die Lage des Schlauches 3 oder die Lage des ersten Mantelabschnittes 12 erfasst werden kann. Insbesondere kann vorgesehen sein, dass die Abstandsmesseinrichtung 52 in Form eines Profilsensors 58 ausgebildet ist.

Weiters kann vorgesehen sein, dass von der Abstandsmesseinrichtung 52 in einem vorgegebenen Längsbereich 59 eine Vielzahl von Messpunkten erfasst wird.

Die richtige Positionierung des Schlauches 3 kann insbesondere durch den dritten Messpunkt 57 ermittelt werden. Dies kann dadurch realisiert werden, dass im Bereich des dritten Messpunkt 57 ausgewertet wird, ob der erfasste Abstand des dritten Messpunktes 57 am Schlauch 3 oder am ersten Mantelabschnitt 12 liegt. Liegt der dritte Messpunkt 57 am Schlauch 3, so ist dies ein Zeichen dafür, dass der Schlauch 3 richtig in den Verbinderkörper 6 eingesetzt ist.

Weiters ist es denkbar, dass bereits vor dem Einsetzen des Schlauches 3 der erste Messpunkt 55 und/oder der zweite Messpunkt 56 und/oder der dritte Messpunkt 57 erfasst wird, wodurch die korrekte Lage des Verbinderkörpers 6 am Presswerkzeug 50 kontrolliert werden kann. Insbesondere kann dadurch erreicht werden, dass ein Außendurchmesser 46 des ersten Mantelabschnittes 12 erfasst werden kann.

Nach dem Einsetzen des Schlauches 3 kann mittels der Abstandsmesseinrichtung 52 ein Außendurchmesser 47 des Schlauches 3 erfasst werden. Außerdem kann ein Außendurchmesser 60 des zweiten Mantelabschnittes 15 erfasst werden.

Aus der Lage der außenliegenden Mantelfläche 19 des zweiten Mantelabschnittes 15 und der Lage der Außenmantelfläche 36 des Schlauches 3 kann ein Abstand 61 berechnet werden. Der Abstand 61 entspricht insbesondere der halben Durchmesserdifferenz des Außendurchmessers 60 des zweiten Mantelabschnittes 15 zum Außendurchmesser 47 des Schlauches 3. Wird von diesem Abstand 61 noch die Wandstärke 21 des zweiten Mantelabschnittes 15 abgezogen, so ergibt dies einen Freiraum 62 zwischen innenliegender Mantelfläche 18 des zweiten Mantelabschnittes 15 und Außenmantelfläche 36 des Schlauches 3. Dieser Freiraum 62 ist jener Abstand, welchen der Schlauch 3 zumindest verformt werden muss, bevor er am zweiten Mantelabschnitt 15 zum Anliegen kommt.

In einer alternativen Ausführungsvariante kann auch vorgesehen sein, dass der Schlauch 3 in einem ersten Verfahrensschritt in den Ringraum 22 des Verbinderkörpers 6 eingesetzt wird und erst im zweiten Verfahrensschritt der Verbinderkörper 6 mitsamt dem eingesetzten Schlauch 3 auf das Presswerkzeug 50 aufgeschoben wird.

Ist der Verbinderkörper 6 korrekt am Verbinderkörper 6 positioniert und der Schlauch 3 korrekt im Ringraum 22 des Verbinderkörpers 6 eingesetzt, so kann mit dem Verpressvorgang zum Verbinden des Schlauches 3 mit dem Steckverbinder 4 begonnen werden. Dabei werden die Presswerkzeuge 50 in Radialrichtung 51 nach außen bewegt, bis diese an einer innenliegenden Mantelfläche 13 des ersten Mantelabschnittes 12 anliegen.

Anschließend wird der erste Mantelabschnitt 12 durch die Presswerkzeuge 50 in Radialrichtung 51 in Richtung zweiten Mantelabschnitt 15 verformt. Dabei kommt die Innenmantelfläche 35 des Schlauches 3 an der außenliegenden Mantelfläche 14 des ersten Mantelabschnittes 12 zum Anliegen, wodurch auch der Schlauch 3 verformt wird. In der Pressmaschine 49 ist eine Messvorrichtung vorgesehen, durch welche die Lage der Presswerkzeuge 50 zu jedem Zeitpunkt genau erfasst werden kann. Dadurch bzw. durch Kenntnis der Wandstärke 20 des ersten Mantelabschnittes 12 kann auch die Lage der außenliegenden Mantelfläche 14 des ersten Mantelabschnittes 12 zu jedem Zeitpunkt während des Verpressvorganges genau bestimmt werden.

Wenn nun die außenliegende Mantelfläche 14 des ersten Mantelabschnitte 12 an der Innenmantelfläche 35 des Schlauches 3 anliegt, so kann durch die Verformung des Schlauches 3 mittels dem ersten Messpunkt 55, welcher die Außenmantelfläche 36 des Schlauches 3 erfasst, auch die Wandstärke 37 des Schlauches 3 berechnet werden. Diese Berechnung der Wandstärke 37 des Schlauches 3 kann dazu dienen, um den notwendigen Umformgrad des Schlauches 3 für eine ausreichend dichte Verpressung des Schlauches 3 im Verbinderkörper 6 zu bestimmen.

Durch ständige Erfassung des ersten Messpunktes 55 und/oder des dritten Messpunktes 57 kann auch bestimmt werden, wann die Außenmantelfläche 36 des Schlauches 3 an der innenliegenden Mantelfläche 18 des zweiten Mantelabschnittes 15 zum Anliegen kommt.

Jede weitere Verformung des ersten Mantelabschnittes 12 nach diesem Zeitpunkt führt zu einer elastischen und/oder plastischen Verformung des Schlauches 3 und somit zu einem quetschen des Schlauches 3. Insbesondere wird der Schlauch 3 soweit verformt, bis er, wie aus Fig. 6 gut ersichtlich, eine Einschnürung 63 aufweist, welche zum Haltern des Schlauches dient.

Nach Abschluss des Pressvorganges können die Presswerkzeuge 50 wieder in Radialrichtung 51 nach innen bewegt werden, um die verpresste Steckerbaugruppe 1 zur Entnahme freizugeben.

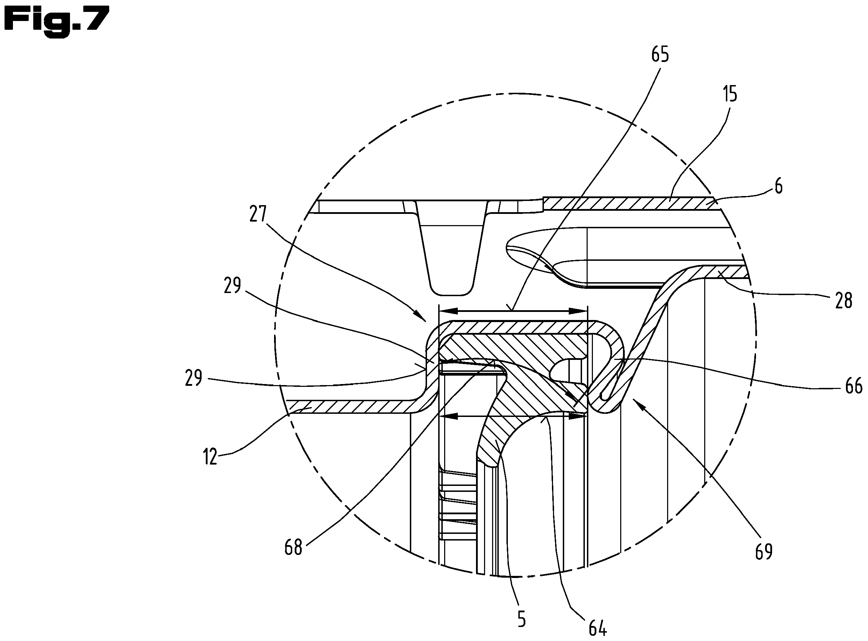

Fig. 7 zeigt in einem weiteren Ausführungsbeispiel ein Detail der Dichtungsaufnahme 27 der Steckerbaugruppe 1 in einer perspektivischen Schnittdarstellung, wobei wiederum für gleiche Teile gleiche Bezugszeichen bzw. Bauteilbezeichnungen wie in den vorangegangenen Figuren 1 bis 6 verwendet werden. Insbesondere ist zur Erleichterung der Orientierung das in Fig. 7 gezeigte Detail in der Fig. 3 markiert. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich kann vorgesehen sein, dass das Dichtungselement 5 axial geklemmt in der Dichtungsaufnahme 27 aufgenommen ist. Dies kann insbesondere dadurch erreicht werden, dass eine Breite 64 des Dichtungselementes 5 im unverbauten Zustand größer ist als eine Breite 65 der Dichtungsaufnahme 27. Durch die Elastizität des Dichtungselementes 5 kann dieses trotz Übermaß in die Dichtungsaufnahme 27 eingesetzt werden, wobei beim Einbau im Wesentlichen das Dichtungselement 5 verformt wird. Nach dem Einbau des Dichtungselementes 5 in der Dichtungsaufnahme 27 sind daher die Breite 64 des Dichtungselementes 5 und die Breite 65 der Dichtungsaufnahme 27 gleich groß.

Das Übermaß der Breite 64 des unverbauten Dichtungselementes 5 gegenüber der Breite 65 der Dichtungsaufnahme 27 kann zwischen 3mm und 0,01mm, insbesondere zwischen 2mm und 0,1mm, bevorzugt zwischen 1,5mm und 0,3mm betragen.

Insbesondere kann vorgesehen sein, dass die Dichtungsaufnahme 27 durch die Stirnwandung 29 und eine zweite Stirnwandung 66 begrenzt ist, wobei die Dichtungsaufnahme 27 in Richtung zur zentralen Längsachse 9 hin eine Verjüngung 67 aufweist. Zum Ausbilden der Verjüngung 67 kann vorgesehen sein, dass die Stirnwandung 29 im rechten Winkel zum ersten Mantelabschnitt 12 angeordnet ist. Die zweite Stirnwandung 66 kann in einem Winkel 68 zur Stirnwandung 29 angeordnet sein. Mit anderen Worten ausgedrückt verlaufen die Stirnwandung 29 und die zweite Stirnwandung 66 bei einer derartigen Ausführungsvariante nicht parallel. Der Winkel 68 kann zwischen 0,1° und 60°, insbesondere zwischen 10° und 50°, bevorzugt zwischen 30° und 45° betragen. Durch diese Maßnahme kann der Sitz des Dichtungselementes 5 in der Dichtungsaufnahme 27 verbessert werden.

Alternativ dazu kann auch vorgesehen sein, dass die zweite Stirnwandung 66 im rechten Winkel zum ersten Mantelabschnitt 12 angeordnet ist und die Stirnwandung 29 in einem Winkel 68 zur zweiten Stirnwandung 66 angeordnet ist.

In wieder einer anderen Ausführungsvariante kann auch vorgesehen sein, dass sowohl die Stirnwandung 29 als auch die zweite Stirnwandung 66 in einem vom rechten Winkel abweichenden Winkel 68 zum ersten Mantelabschnitt 12 angeordnet sind, sodass die Verjüngung ausgebildet ist.

Weiters kann auch vorgesehen sein, dass sowohl die Stirnwandung 29 als auch die zweite Stirnwandung 66 im rechten Winkel zum ersten Mantelabschnitt 12 angeordnet sind, sodass keine Verjüngung ausgebildet ist. Bei dieser Ausführungsvariante kann die Klemmung des Dichtungselementes 5 in der Dichtungsaufnahme 27 durch das Übermaß des Dichtungselementes 5 erreicht werden.

Weiters kann vorgesehen sein, dass die zweite Stirnwandung 66 in Form einer Schlaufe 69 ausgebildet ist. Dadurch kann der notwendige Platzbedarf für die zweite Stirnwandung 66 möglichst gering ausfallen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Steckerbaugruppe | 28 | Dritter Mantelabschnitt |
| 2 | Gegensteckverbinder | 29 | Stirnwandung Dichtungsaufnahme |
| 3 | Schlauch | 30 | Stirnfläche Schlauch |
| 4 | Steckverbinder | 31 | Stirnwandung erster Mantelabschnitt |
| 5 | Dichtungselement | 32 | Axiale Erstreckung Ringraum |
| 6 | Verbinderkörper | 33 | Verbindungsabschnitt |
| 7 | Fahrzeug | 34 | Abstand |
| 8 | Turbolader | 35 | Innenmantelfläche Schlauch |
| 9 | Längsachse des Steckverbinders | 36 | Außenmantelfläche Schlauch |
| 10 | | 37 | Wandstärke Schlauch |
| 11 | Federelement | 38 | Vorderkante |
| 12 | erster Mantelabschnitt | 39 | Verjüngung |
| 13 | innenliegende Mantelfläche | 40 | Einführweite Ringraum |
| 14 | außenliegende Mantelfläche | 41 | axiale Länge Verjüngung |
| 15 | weiter Mantelabschnitt | 42 | Überstand Verjüngung |
| 16 | erster Endabschnitt Steckverbinder | 43 | Innendurchmesser Hauptbereich zweiter Mantelabschnitt |
| 17 | Stirnwandabschnitt | 44 | Innendurchmesser Verjüngung zweiter Mantelabschnitt |
| 18 | innenliegende Mantelfläche | 45 | Innendurchmesser Schlauch |
| 19 | außenliegende Mantelfläche | 46 | Außendurchmesser erster Mantelabschnitt |
| 20 | Wandstärke erster Mantelabschnitt | 47 | Außendurchmesser Schlauch |
| 21 | Wandstärke zweiter Mantelabschnitt | 48 | hinterer Schlauchabschnitt |
| 22 | Ringraum | 49 | Pressmaschine |
| 23 | Hauptweite Ringraum | 50 | Presswerkzeug |
| 24 | zweiter Endabschnitt Steckverbinder | 51 | Radialrichtung |
| 25 | Schlauchaufnahmeseite | 52 | Abstandsmesseinrichtung |
| 26 | Abschrägung | 53 | erste Fensteröffnung |
| 27 | Dichtungsaufnahme Steckverbinder | | |
| 54 | zweite Fensteröffnung | | |
| 55 | erster Messpunkt | | |
| 56 | zweiter Messpunkt | | |
| 57 | dritter Messpunkt | | |
| 58 | Profilsensor | | |
| 59 | Längsbereich Messpunkte | | |
| 60 | Außendurchmesser zweiter Mantelabschnitt | | |
| 61 | Abstand Schlauch - zweiter Mantelabschnitt | | |
| 62 | Freiraum | | |
| 63 | Einschnürung | | |
| 64 | Breite Dichtungselement | | |
| 65 | Breite Dichtungsaufnahme | | |
| 66 | zweite Stirnwandung | | |
| 67 | Verjüngung | | |
| 68 | Winkel | | |
| 69 | Schlaufe | | |

## Patentansprüche

1. Verfahren zum Verbinden eines Verbindungsabschnittes (33) eines Schlauches (3) für flüssige oder gasförmige Medien mit einem Steckverbinder (4), wobei der Steckverbinder (4) einen Verbinderkörper (6) umfasst, welcher Verbinderkörper (6) einen Ringraum (22) aufweist, der durch einen hülsenförmigen, im Querschnitt eine zentrale Längsachse (9) des Steckverbinders (4) ringförmig umgebenden ersten Mantelabschnitt (12) und einem hülsenförmigen, im Querschnitt die zentrale Längsachse (9) ringförmig umgebenden zweiten Mantelabschnitt (15) des Steckverbinders (4) ausgebildet ist, wobei der erste Mantelabschnitt (12) vom zweiten Mantelabschnitt (15) umgeben ist und die Mantelabschnitte (12, 15) an einem zweiten Endabschnitt (24) offen zueinander sind, wodurch eine Schlauchaufnahmeseite (25) des Verbinderkörpers (6) ausgebildet ist, wobei
- in einem ersten Verfahrensschritt der Verbindungsabschnitt (33) des Schlauches (3) von der Schlauchaufnahmeseite (25) des Verbinderkörpers (6) her in den Ringraum (22) des Steckverbinders (4) eingeschoben und positioniert wird;
- in einem zweiten Verfahrensschritt ein Presswerkzeug (50) den ersten Mantelabschnitt (12) des Verbinderkörpers (6) unter gleichzeitiger Verformung des zwischen dem ersten Mantelabschnitt (12) und dem zweiten Mantelabschnitt (15) liegenden Verbindungsabschnittes (33) des Schlauches (3) in Richtung zum zweiten Mantelabschnitt (15) verformt wird und dadurch der Verbindungsabschnitt (33) des Schlauches (3) zwischen erstem Mantelabschnitt (12) und zweitem Mantelabschnitt (15) geklemmt wird,
wobei
der zweite Mantelabschnitt (15) an einer Vorderkante (38) der Schlauchaufnahmeseite (25) eine Verjüngung (39) aufweist, wodurch sichergestellt wird, dass der Verbindungsabschnitt (33) des Schlauches (3) während des Verpressvorganges zumindest im von der Vorderkante (38) distanzierten Bereich des Ringraumes (22) frei in Richtung zweiten Mantelabschnitt (15) verformt wird, bevor der Verbindungsabschnitt (33) des Schlauches (3) am zweiten Mantelabschnitt (15) zum Anliegen kommt,
**dadurch gekennzeichnet, dass** im zweiten Mantelabschnitt (15) eine erste Fensteröffnung (53) und eine zweite Fensteröffnung (54) ausgebildet sind, wobei die erste Fensteröffnung (53) im Bereich der Verjüngung (39) ausgebildet ist und, dass mittels einer Abstandsmesseinrichtung (52) zumindest an zwei axial zueinander beabstandeten Messpunkten die Lage einer außenliegenden Mantelfläche (19) des zweiten Mantelabschnittes (15) und durch die Fensteröffnungen hindurch die Lage der Außenmantelfläche (36) des Schlauches (3) und/oder die Lage einer außenliegenden Mantelfläche (14) des ersten Mantelabschnittes (12) erfasst wird.

2. Verfahren nach Anspruch 1, **dadurch gekennzeichnet, dass** aus der Lage der außenliegenden Mantelfläche (19) des zweiten Mantelabschnittes (15) und der Lage einer Außenmantelfläche (36) des Schlauches (3) ein Abstand (61) zwischen diesen beiden Oberflächen (19, 36) berechnet wird.

3. Verfahren nach einem der vorhergehenden Ansprüche, **dadurch gekennzeichnet, dass** vor dem Verformen und/oder beim Verformen des ersten Mantelabschnitts (12) mittels einer Abstandsmesseinrichtung (52) durch eine im zweiten Mantelabschnitt (15) angeordnete erste Fensteröffnung (53) und/oder zweite Fensteröffnung (54) hindurch die den Fensteröffnungen (53, 54) zugewandte Außenmantelfläche (36) des Schlauches (3) erfasst wird und die Verformung des ersten Mantelabschnittes (12) in Abhängigkeit vom Ergebnis der mit der Abstandsmesseinrichtung (52) durchgeführten Erfassung der Außenmantelfläche (36) des Schlauches (3) durchgeführt wird.

4. Verfahren nach einem der vorhergehenden Ansprüche, **dadurch gekennzeichnet, dass** als Abstandsmesseinrichtung (52) ein Profilsensor (58) verwendet wird, welcher während des Verpressvorganges zumindest die zwei Messpunkte (55, 56), vorzugsweise mehrere Messpunkte auf einem vorgegebenen Längsbereich (59) erfasst.

5. Verfahren nach einem der vorhergehenden Ansprüche, **dadurch gekennzeichnet, dass** während des Verpressvorganges eine Wandstärke (37) des Schlauches (3), auf Basis der Information über die aktuelle Position des Presswerkzeuges (50) und auf Basis der von der Abstandsmesseinrichtung (52) erfassten Messwerte der Lage der den Fensteröffnungen (53, 54) zugewandten Außenmantelfläche (36) des Schlauches (3), berechnet wird.

6. Verfahren nach einem der vorhergehenden Ansprüche, **dadurch gekennzeichnet, dass** vor dem Einschieben des Verbindungsabschnittes (33) des Schlauches (3) in den Ringraum (22) des Steckverbinders (4) der erste Mantelabschnitt (12) mittels der Abstandsmesseinrichtung (52) erfasst wird.

7. Verfahren nach einem der vorhergehenden Ansprüche, **dadurch gekennzeichnet, dass** mittels der Abstandsmesseinrichtung (52) die korrekte Einsteckposition des Verbindungsabschnittes (33) des Schlauches (3) im Ringraum (22) erfasst wird.

8. Steckverbinder (4), insbesondere zur Verwendung in einem Verfahren nach einem der vorhergehenden Ansprüche, der Steckverbinder (4) umfassend einen Verbinderkörper (6), welcher Verbinderkörper (6) einen Ringraum (22) zur Aufnahme eines Verbindungsabschnittes (33) eines Schlauches (3) für flüssige oder gasförmige Medien aufweist, wobei der Ringraum (22) zwischen einem hülsenförmigen, im Querschnitt eine zentrale Längsachse (9) des Steckverbinders (4) ringförmig umgebenden ersten Mantelabschnitt (12) und einem hülsenförmigen, im Querschnitt die zentrale Längsachse (9) ringförmig umgebenden zweiten Mantelabschnitt (15) des Steckverbinders (4) liegt, wobei der erste Mantelabschnitt (12) vom zweiten Mantelabschnitt (15) umgeben ist und die Mantelabschnitte (12, 15) an einem zweiten Endabschnitt (24) offen zueinander sind, wodurch eine Schlauchaufnahmeseite (25) des Verbinderkörpers (6) ausgebildet ist, wobei der zweite Mantelabschnitt (15) an dessen Vorderkante (38) der Schlauchaufnahmeseite (25) eine Verjüngung (39) aufweist, **dadurch gekennzeichnet, dass** im zweiten Mantelabschnitt (15) eine erste Fensteröffnung (53) und eine zweite Fensteröffnung (54) ausgebildet sind, wobei die erste Fensteröffnung (53) im Bereich der Verjüngung (39) ausgebildet ist.

9. Steckverbinder nach Anspruch 8, **dadurch gekennzeichnet, dass** eine Einführweite (40) des Ringraumes (22) kleiner ist als eine Hauptweite (23) des Ringraumes (22).

10. Steckverbinder nach Anspruch 8 oder 9, **dadurch gekennzeichnet, dass** die Einführweite (40) des Ringraumes (22) zwischen 50% und 99%, insbesondere zwischen 70% und 95%, bevorzugt zwischen 88% und 92% der Hauptweite (23) des Ringraumes (22) beträgt.

11. Steckverbinder nach einem der Ansprüche 8 bis 10, **dadurch gekennzeichnet, dass** die Verjüngung (39) auf einer axialen Länge (41) von 1mm bis 20mm, insbesondere von 2mm bis 15mm, bevorzugt von 2mm bis 8mm ausgebildet ist.

12. Steckverbinder nach einem der Ansprüche 8 bis 11, **dadurch gekennzeichnet, dass** die Verjüngung (39) um einen Überstand (42) von 0,1mm bis 10mm, insbesondere von 0,3mm bis 3mm, bevorzugt von 0,4mm bis 1mm gegenüber einem Innendurchmesser (43) des zweiten Mantelabschnittes (15) vorstehend ausgebildet ist.

13. Steckverbinder nach einem der Ansprüche 8 bis 12, **dadurch gekennzeichnet, dass** auf den Umfang verteilt im zweiten Mantelabschnitt (15) drei erste Fensteröffnungen (53) und drei zweite Fensteröffnung (54) ausgebildet sind, wobei die Fensteröffnungen (53, 54) jeweils in einem Winkel von 120° zueinander am Umfang des zweiten Mantelabschnittes (15) angeordnet sind.

## Claims

1. A method for connecting a connection section (33) of a hose (3) for liquid or gaseous media with a plug connector (4), wherein the plug connector (4) comprises a connector body (6), which connector body (6) has an annular space (22), which is formed by a sleeve-shaped first casing section (12), which annularly surrounds a central longitudinal axis (9) of the plug connector (4) in cross-section, and a sleeve-shaped second casing section (15) of the plug connector (4), which section annularly surrounds the central longitudinal axis (9) in cross-section, wherein the first casing section (12) is surrounded by the second casing section (15), and the casing sections (12, 15) are open toward one another at a second end section (24), whereby a hose accommodation side (25) of the connector body (6) is formed, wherein
- in a first method step, the connection section (33) of the hose (3) is pushed into the annular space (22) of the plug connector (4) from the hose accommodation side (25) of the connector body (6), and positioned there;
- in a second method step, a pressing tool (50) deforms the first casing section (12) of the connector body (6), with simultaneous deformation of the connection section (33) of the hose (3), which section lies between the first casing section (12) and the second casing section (15), in the direction towards the second casing section (15), and thereby the connection section (33) of the hose (3) is clamped between the first casing section (12) and the second casing section (15),
wherein
the second casing section (15) has a narrowing (39) at a front edge (38) of the hose accommodation side (25), whereby it is ensured that the connection section (33) of the hose (3) is freely deformed in the direction of the second casing section (15) during the pressing process, at least in the region of the annular space (22) that is distant from the front edge (38), before the connection section (33) of the hose (3) comes to lie against the second casing section (15),
**characterized in that** a first window opening (53) and a second window opening (54) are disposed in the second casing section (15), wherein the first window opening (53) is formed in the region of the narrowing (39), and that
by means of a distance measurement device (52), at at least two measurement points that lie axially apart from one another, the position of an outer casing surface (19) of the second casing section (15) is detected and, through the window openings, the position of the exterior casing surface (36) of the hose (3), and/or the position of an outer casing surface (14) of the first casing section (12) is detected.

2. The method according to claim 1, **characterized in that** a distance (61) between the two surfaces (19, 36) is calculated from the position of the outer casing surface (19) of the second casing section (15) and the position of an exterior casing surface (36) of the hose (3).

3. The method according to one of the preceding claims, **characterized in that** before deformation and/or during deformation of the first casing section (12), the exterior casing surface (36) of the hose (3), which surface faces the window openings (53, 54), is detected by means of a distance measurement device (52) through a first window opening (53) and/or a second window opening (54) disposed in the second casing section (15), and the deformation of the first casing section (12) is carried out as a function of the result of the detection of the external casing surface (36) of the hose (3), which detection is carried out using the distance measurement device (52).

4. The method according to one of the preceding claims, **characterized in that** a profile sensor (58) is used as distance measurement device (52), which sensor detects at least the two measurement points (55, 56), preferably multiple measurement points on a predetermined longitudinal range (59) during the pressing process.

5. The method according to one of the preceding claims, **characterized in that** during the pressing process, a wall thickness (37) of the hose (3) is calculated on the basis of the information regarding the current position of the pressing tool (50) and on the basis of the measurement values detected by the distance measurement device (52) of the position of the exterior casing surface (36) of the hose (3), which surface faces the window openings (53, 54).

6. The method according to one of the preceding claims, **characterized in that** that before the connection section (33) of the hose (3) is pushed into the annular space (22) of the plug connector (4), the first casing section (12) is detected by means of the distance measurement device (52).

7. The method according to one of the preceding claims, **characterized in that** the correct insertion position of the connection section (33) of the hose (3) in the annular space (22) is detected by means of the distance measurement device (52).

8. A plug connector (4), in particular for use in a method according to one of the preceding claims, the plug connector (4) comprising a connector body (6), which connector body (6) has an annular space (22) for accommodating a connection section (33) of a hose (3) for liquid or gaseous media, wherein the annular space (22) lies between a sleeve-shaped first casing section (12), which annularly surrounds a central longitudinal axis (9) of the plug connector (4) in cross-section, and a sleeve-shaped second casing section (15) of the plug connector (4), which section annularly surrounds the central longitudinal axis (9) in cross-section, wherein the first casing section (12) is surrounded by the second casing section (15), and the casing sections (12, 15) are open toward one another at a second end section (24), whereby a hose accommodation side (25) of the connector body (6) is formed, wherein the second casing section (15) has a narrowing (39) at its front edge (38) of the hose accommodation side (25), **characterized in that** a first window opening (53) and a second window opening (54) are formed in the second casing section (15), wherein the first window opening (53) is formed in the region of the narrowing (39).

9. The plug connector according to claim 8, **characterized in that** an introduction width (40) of the annular space (22) is smaller than a main width (23) of the annular space (22).

10. The plug connector according to claim 8 or 9, **characterized in that** the introduction width (40) of the annular space (22) amounts to between 50 % and 99 %, in particular between 70 % and 95 %, preferably between 88 % and 92 % of the main width (23) of the annular space (22).

11. The plug connector according to one of claims 8 to 10, **characterized in that** the narrowing (39) is formed on an axial length (41) of 1 mm to 20 mm, in particular of 2 mm to 15 mm, preferably of 2 mm to 8 mm.

12. The plug connector according to one of claims 8 to 11, **characterized in that** the narrowing (39) is formed to project by an excess length (42) of 0.1 mm to 10 mm, in particular of 0.3 mm to 3 mm, preferably of 0.4 mm to 1 mm relative to an inside diameter (43) of the second casing section (15).

13. The plug connector according to one of claims 8 to 12, **characterized in that** three first window openings (53) and three second window opening (54) are formed in the second casing section (15), distributed over the circumference, wherein the window openings (53, 54) are disposed, in each instance, at an angle of 120° relative to one another, on the circumference of the second casing section (15).

## Revendications

1. Procédé pour la liaison d'une portion de liaison (33) d'un tuyau (3) pour milieux liquides ou gazeux avec un connecteur (4), dans lequel le connecteur (4) comprend un corps de connecteur (6), ce corps de connecteur (6) comprenant un espace annulaire (22) qui est constitué d'une première portion d'enveloppe (12) en forme de manchon entourant de manière annulaire en coupe transversale un axe longitudinal central (9) du connecteur (4) et d'une deuxième portion d'enveloppe (15), en forme de manchon, entourant de manière annulaire en coupe transversale l'axe longitudinal (9), du connecteur (4), dans lequel la première portion d'enveloppe (12) est entourée par la deuxième portion d'enveloppe (15) et les portions d'enveloppe (12, 15) sont ouvertes l'une par rapport à l'autre dans une deuxième portion d'extrémité (24), ce qui permet de former un côté de logement de tuyau (25) du corps de connecteur (6), dans lequel
- dans une première étape, la première portion de liaison (33) du tuyau (3) est insérée à partir du côté de logement du tuyau (25) du corps de connecteur (6) vers l'espace annulaire (22) du connecteur (4) et positionnée ;
- dans une deuxième étape, un outil de pressage (50) déforme la première portion d'enveloppe (12) du corps de connecteur (6), en déformant simultanément la portion de liaison (33) du tuyau (3) se trouvant entre la première portion d'enveloppe (12) et la deuxième portion d'enveloppe (15) en direction de la deuxième portion d'enveloppe (15) et la portion de liaison (33) du tuyau (3) est ainsi coincée entre la première portion d'enveloppe (12) et la deuxième portion d'enveloppe (15),
dans lequel
la deuxième portion d'enveloppe (15) comprend, au niveau d'un bord avant (38) du côté de logement du tuyau (25), un rétrécissement (39), ce qui permet de garantir que la portion de liaison (33) du tuyau (3) soit déformée, pendant le processus de pressage, au moins dans la zone de l'espace annulaire (22) distante du bord avant (38), librement en direction de la deuxième portion d'enveloppe (15), avant que la portion de liaison (33) du tuyau (3) arrive en appui contre la deuxième portion d'enveloppe (15),
**caractérisé en ce que**, dans la deuxième portion d'enveloppe (15), sont réalisées une première ouverture de fenêtre (53) et une deuxième ouverture de fenêtre (54), dans laquelle la première ouverture de fenêtre (53) est réalisée au niveau du rétrécissement (39) et **en ce que**, au moyen d'un dispositif de mesure de distance (52), au moins au niveau de deux points de mesure distants axialement entre eux, la position d'une surface d'enveloppe externe (19) de la deuxième portion d'enveloppe (15) et, à travers les ouvertures de fenêtres, la position de la surface d'enveloppe externe (36) du tuyau (3) et/ou la position d'une surface d'enveloppe externe (14) de la première portion d'enveloppe (12) est mesurée.

2. Procédé selon la revendication 1, **caractérisé en ce que**, à partir de la position de la surface d'enveloppe externe (19) de la deuxième portion d'enveloppe (15) et de la position d'une surface d'enveloppe externe (36) du tuyau (3), une distance (61) entre ces deux surfaces (19, 36) est calculée.

3. Procédé selon l'une des revendications précédentes, **caractérisé en ce que**, avant la déformation et/ou lors de la déformation de la première portion d'enveloppe (12), au moyen d'un dispositif de mesure de distance (52), à travers une première ouverture de fenêtre (53) et/ou une deuxième ouverture de fenêtre (54) disposée dans la deuxième portion d'enveloppe (15), la surface d'enveloppe externe (36), orientée vers les ouvertures de fenêtres (53, 54), du tuyau (3) est mesurée et la déformation de la première portion d'enveloppe (12) est effectuée en fonction du résultat de la mesure, effectuée avec le dispositif de mesure de distance (52), de la surface d'enveloppe externe (36) du tuyau (3).

4. Procédé selon l'une des revendications précédentes, **caractérisé en ce que**, en tant que dispositif de mesure de distance (52), un capteur de profil (58) est utilisé, qui mesure, pendant le processus de pressage, au moins les deux points de mesure (55, 56), de préférence plusieurs points de mesure sur une zone longitudinale (59) prédéterminée.

5. Procédé selon l'une des revendications précédentes, **caractérisé en ce que**, pendant le processus de pressage, une épaisseur de paroi (37) du tuyau (3) est calculée sur la base de l'information concernant la position actuelle de l'outil de pressage (50) et sur la base des valeurs de mesure, relevées par le dispositif de mesure de distance (52), de la position de la surface d'enveloppe externe (36), orientée vers les ouvertures de fenêtres (53, 54) du tuyau (3).

6. Procédé selon l'une des revendications précédentes, **caractérisé en ce que**, avant l'insertion de la portion de liaison (33) du tuyau (3) dans l'espace annulaire (22) du connecteur (4), la première portion d'enveloppe (12) est mesurée au moyen du dispositif de mesure de distance (52).

7. Procédé selon l'une des revendications précédentes, **caractérisé en ce que**, au moyen du dispositif de mesure de distance (52), la position d'insertion correcte de la portion de liaison (33) du tuyau (3) dans l'espace annulaire (22) est mesurée.

8. Connecteur (4), plus particulièrement destiné à être utilisé dans un procédé selon l'une des revendications précédentes, ce connecteur (4) comprenant un corps de connecteur (6), ce corps de connecteur (6) comprenant un espace annulaire (22) pour le logement d'une portion de liaison (33) d'un tuyau (3) pour des milieux liquides ou gazeux, dans lequel l'espace annulaire (22) se trouve entre une première portion d'enveloppe en forme de manchon entourant de manière annulaire en coupe transversale un axe longitudinal central (9) du connecteur (4) et une deuxième portion d'enveloppe (15), en forme de manchon, entourant de manière annulaire en coupe transversale un axe longitudinal central (9), du connecteur (4), dans lequel la première portion d'enveloppe (12) est entourée par la deuxième portion d'enveloppe (15) et les portions d'enveloppe (12, 15) sont ouvertes l'une par rapport à l'autre au niveau d'une deuxième portion d'extrémité (24), ce qui permet de former un côté de logement de tuyau (25) du corps de connecteur (6), dans lequel la deuxième portion d'enveloppe (15) comprend, au niveau de son bord avant (38) du côté de logement de tuyau (25), un rétrécissement (39), **caractérisé en ce que**, dans la deuxième portion d'enveloppe (15) sont réalisées une première ouverture de fenêtre (53) et une deuxième ouverture de fenêtre (54), dans lequel la première ouverture de fenêtre (53) est réalisée au niveau du rétrécissement (39).

9. Connecteur selon la revendication 8, **caractérisé en ce qu'**une largeur d'introduction (40) de l'espace annulaire (22) est inférieure à une largeur principale (23) de l'espace annulaire (22).

10. Connecteur selon la revendication 8 ou 9, **caractérisé en ce qu'**une largeur d'introduction (40) de l'espace annulaire (22) représente entre 50 % et 99 %, plus particulièrement entre 70 % et 95 %, de préférence entre 88 % et 92 % de la largeur principale (23) de l'espace annulaire (22).

11. Connecteur selon l'une des revendications 8 à 10, **caractérisé en ce que** le rétrécissement (39) est réalisé sur une longueur axiale (41) de 1 mm à 20 mm, plus particulièrement de 2 mm à 15 mm, de préférence de 2 mm à 8 mm.

12. Connecteur selon l'une des revendications 8 à 11, **caractérisé en ce que** le rétrécissement (39) est réalisé avec un surplomb (42) de 0,1 mm à 10 mm, plus particulièrement de 0,3 mm à 3 mm, de préférence de 0,4 mm à 1 mm en saillie par rapport à un diamètre interne (43) de la deuxième portion d'enveloppe (15).

13. Connecteur selon l'une des revendications 8 à 12, **caractérisé en ce que** trois premières ouvertures de fenêtres (53) et trois deuxièmes ouvertures de fenêtres (54) sont réalisées de manière répartie sur la circonférence dans la deuxième portion d'enveloppe (15), dans lequel les ouvertures de fenêtres (53, 54) sont disposées avec un angle de 120° entre elles sur la circonférence de la deuxième portion d'enveloppe (15).
